# EUROPEAN PATENT APPLICATION

(11) **EP 1 427 169 A1**
(43) Date of publication of application: **09.06.2004**
(21) Application number: 02258097.1
(22) Date of filing: 25.11.2002
(51) Int. Cl.: H04L 29/08

(54) **File-downloading system and method**

(71) Applicant: Culture.com Technology (Macau) Ltd, Macau (CN)
(72) Inventor: Lai, Chen Chun, Taipei 100 Taiwan (CN)
(74) Representative: Ablett, Graham Keith

(57) **Abstract**

A file downloading system and a file downloading method are provided, whereby a user of a terminal device is linked to a website server through a communication network, so as to allow the user to download files provided from the website server. Upon receiving a file downloading request from the user, the website server searches in a member database for a membership number designated to the user, and retrieves a corresponding file identification number from a file resource database for obtaining the requested file, whereby the membership number and file identification number are used to establish a file downloading record stored in a file downloading database. The website server divides the requested file into a plurality of packets to be transmitted to the user's terminal device. If network linkage is accidentally interrupted during packet transmission, the website server can later transmit untransmitted packets to the user without having to re-downioad the previously downloaded packets.

## Description

### FIELD OF THE INVENTION

The present invention relates to file downloading systems and methods, and more particularly, to a file downloading system and a file downloading method applied to a website server, whereby if network linkage is accidentally interrupted during file transmission from the website server to a user, the user is allowed later to download untransmitted part of the file without having to re-download the previously downloaded part of the file.

### BACKGROUND OF INVENTION

With advance development of Internet and computer technology, users at computer devices are allowed to download desirable files provided from website serves and store the downloaded files in the computer devices.

However, in the case of a website server being overloaded, busy network transmission or network linkage disconnection to undesirably interrupt downloading of a file, a user needs to re-download the file. For example, when a mail is transmitted from a mail server through mail software (such as Outlook Express) to the user, if mail transmission is interrupted accidentally as the case described above with part of the mail remaining untransmitted, the user needs to re-download the whole mail including the previously transmitted and untransmitted parts of the file. This thereby considerably wastes a lot of time of the user especially for downloading files with large data content.

Therefore, the problem to be solved herein is to provide a file downloading method and a file downloading system, so as to allow users to time-effectively download files without having to re-download previously downloaded part of files if file transmission occurs to be accidentally interrupted.

### SUMMARY OF THE INVENTION

A primary objective of the present invention is to provide a file downloading method and a file downloading system, whereby if network transmission of files occurs to be accidentally interrupted, users do not need to re-download previously downloaded part of the files, and thereby can time-effectively download the files to be stored into computer devices of the users.

In accordance with the foregoing and other objectives, the present invention proposes a file downloading method and a file downloading system. The file downloading method is used for linking a user at a terminal device to a website server via a communication network, so as to allow the user to download file resources provided from the website server. The file downloading method comprises the steps of: (1) sending a file downloading request via the user to the website server, and retrieving via the website server respectively from a member database and a file resource database thereof for a membership number and a file identification number corresponding to a login account and a password of the user and a requested file contained in the file downloading request, so as to establish a file downloading record by the membership number and the file identification number and to store the file downloading record in a file downloading database of the website server; (2) retrieving via the website server from the file resource database for the requested file according to the file identification number, and dividing the requested file into a plurality of packets, allowing the packets and a total packet number to be stored in the file downloading record; (3) transmitting in order the packets via the website server to the terminal device of the user, and updating the total packet number in the file downloading record by deducting the total packet number by one when the user receives a packet; and (4) determining via the website server if the total packet number is zero; if yes, the requested file being successfully downloaded to the terminal device of the user, and deleting the file downloading record corresponding to the requested file; if no, going back to step (3).

In step (3) of the above file downloading method, if packet transmission from the website server to the terminal device of the user is interrupted, step (3) further comprises the steps of: (3-1) inputting the login account and the password via the user to log in the website server; and sending a file downloading request to the website server; (3-2) searching via the website server respectively in the member database and the file resource database for a membership number and a file identification number corresponding to the login account and password of the user and a requested file contained in the file downloading request, and retrieving via the website server from the file downloading database for a file downloading record corresponding to the membership number and the file identification number; (3-3) determining if packet destinations stored in the retrieved file downloading record are consistent with an IP address of the terminal device of the user; if yes, proceeding to step (3-4); if no, going back to step (1); and (3-4) retrieving untransmitted packets via the website server according to the total packet number in the retrieved file downloading record, and transmitting the untransmitted packets via the website server to the terminal device of the user in a manner that, when the user receives a packet and sends a packet-received request back to the website server, the total packet number in the retrieved file downloading record is updated by deducting the total packet number by one; then, proceeding to step (4).

The file downloading system according to the invention is established in a website server, for allowing a user at a terminal device to download file resources provided from the website server via a communication network. The file downloading system comprises: a transmitting/receiving module for receiving and processing a file downloading request from the user, allowing processed results of the file downloading request to be transmitted to the terminal device of the user; a file resource database for storing a plurality of file records relating to files provided from the website server to be downloaded by the user, wherein each file record includes a file identification number and a file corresponding to the file identification number; a member database for storing a plurality of member data records, each member data record including a login account and a password of a user and a membership number corresponding to the login account and password, wherein upon receiving the file downloading request from the user, the transmitting/receiving module retrieves respectively from the member database and the file resource database for a membership number and a file identification number corresponding to the login account and password of the user and a requested file contained in the file downloading request, so as to establish a file downloading record by the membership number and the file identification number; a packet processing module for dividing the requested file into a plurality of packets according to file size and limitation in packet size for network transmission when the transmitting/receiving module retrieves from the file resource database for the requested file according to the file identification number, and for storing the packets and a total packet number in the file downloading record corresponding to the membership number of the user and the file identification number of the requested file; a file downloading database for storing a plurality of file downloading records, wherein each file downloading record includes a membership number of a user who downloads a corresponding file, a file identification number of the file, a total packet number and packets formed by division of the file; and a calculating module for updating a total packet number in a file downloading record by deducting the total packet number by one when the transmitting/receiving module transmits a packet formed by division of a corresponding file to the terminal device of the user, wherein when the total packet number is reduced to be zero, the file is successfully downloaded to the user, and the file downloading record corresponding to the downloaded file is deleted by the transmitting/receiving module.

Therefore, when a user downloads a file with large data content, in the case of a network server being overloaded, busy network transmission or network linkage disconnection to interrupt file transmission, the user may continuously download untransmitted part of the file after re-logging into the file downloading system, without having to re-download previously downloaded part of the file as implemented in the prior art, thereby making file downloading time-effectively to carry out through the use of the file downloading method and system according to the invention.

### BRIEF DESCRIPTION OF THE DRAWINGS

The present invention can be more fully understood by reading the following detailed description of the preferred embodiments, with reference made to the accompanying drawings wherein:
FIG. 1 is a system block diagram showing basic architecture of a file downloading system according to a preferred embodiment of the invention;
FIGs. 2(A)-2(C) are tables showing data stored in a file downloading database of the file downloading system shown in FIG. 1; and
FIGs. 3(A) and 3(B) are flowcharts showing process steps of a file downloading method in the use of the file downloading system according to the invention.

### DETAILED DESCRIPTION OF THE PREFERRED EMBODIMENT

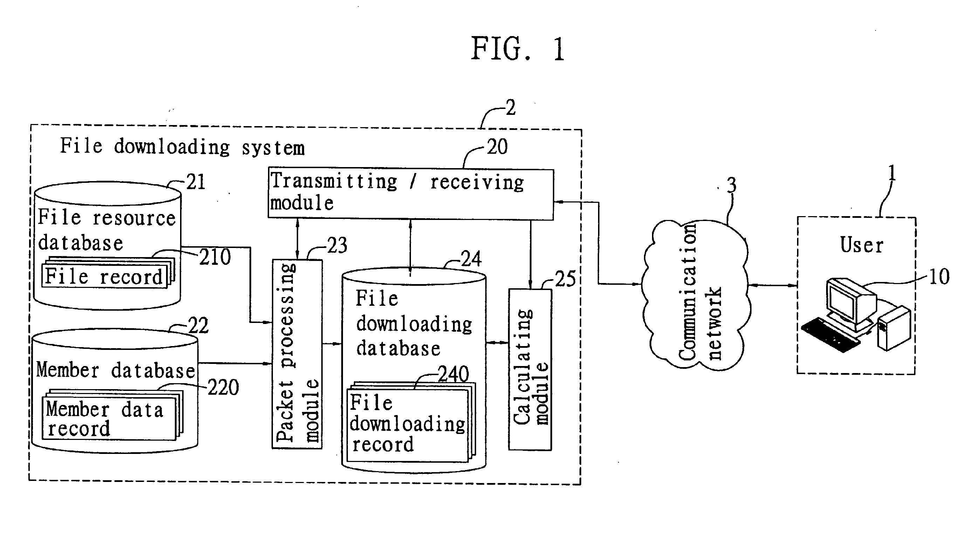

FIG. 1 illustrates basic architecture of a file downloading system according to a preferred embodiment of the invention. As shown in the drawing, the file downloading system 2 is established in a network server. A user 1 at a terminal device (such as a computer device) 10 may be linked to the file downloading system 2 via a communication network 3 (such as Internet), so as to log into the file downloading system 2 and download files provided from the file downloading system 2. The file downloading system 2 includes a transmitting/receiving module 20, a file resource database 21, a member database 22, a packet processing module 23, a file downloading database 24 and a calculating module 25.

The transmitting/receiving module 20 is connected to the communication network 3, and used to receive requests transmitted from the computer device 10 of the user 1; the transmitting/receiving module 20 responsively processes the received requests and transmits processed results for the requests to the computer device 10 of the user 1 via the communication network 3. The file resource database 21 is used to store a plurality of file records 210 relating to data of files downloaded from the file downloading system 2 to the user 1, wherein each file record 210 includes a file identification number and a file designated with the file identification number. The member database 22 is used to store a plurality of member data records 220 relating to data of users 1 who log into the file downloading system 2; each member data record 220 includes a login account and a password of a user 1, a membership number corresponding to the login account and password, a name of the user 1, contact data of the user 1, etc. Thereby, with required login account and password being inputted for logging into the file downloading system 2, the user 1 is allowed to download files from the file downloading system 2.

Upon receiving a file downloading request from the computer device 10 of the user 1, the transmitting/receiving module 20 searches in the member database 22 for a membership number corresponding to the inputted login account and password of the user 1, and retrieves a file identification number from the file resource database 21 corresponding to a requested file to be downloaded by the user 1, whereby the membership number and the file identification number are used to establish a file downloading record 240 stored in the file downloading database 24.

The packet processing module 23 is connected to the transmitting/receiving module 20, the file resource database 21, the member database 22 and the file downloading database 24. After the transmitting/receiving module 20 receives a file downloading request from the user 1 and retrieves a requested file from the file resource database 21, the packet processing module 23 divides the requested file into an appropriate number of packets according to file size and limitation in packet size for network transmission, and thus obtains a total number of the packets. Then, the packet processing module 23 searches for a file downloading record 240 corresponding to the membership number of the user 1 and the file identification number of the requested file, so as to store the packets and the total packet number in the file downloading record 240.

When the transmitting/receiving module 20 in order transmits the packets of the requested file to the computer device 10 of the user 1, and receives a next-packet delivery request from the computer device 10 of the user 1, the calculating module 25 is prompted to deduct the total packet number by 1 in the file downloading record 240 until the total packet number reduces to be zero. In the meantime, it indicates that the requested file is successfully downloaded by the user 1, and the transmitting/receiving module 20 deletes the file downloading record 240 corresponding to the completely downloaded file.

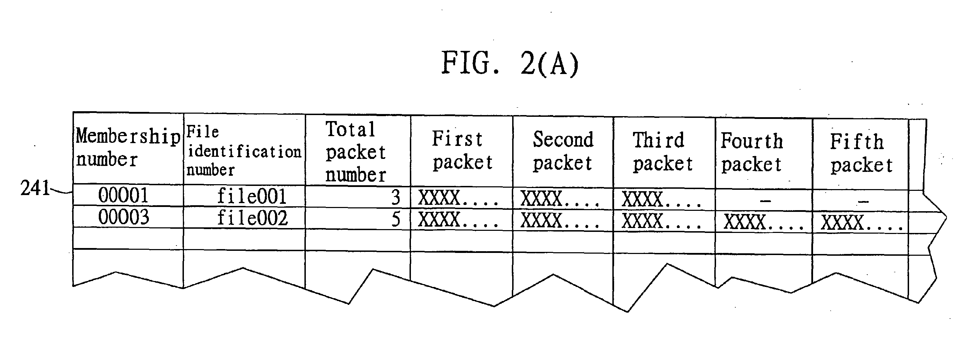

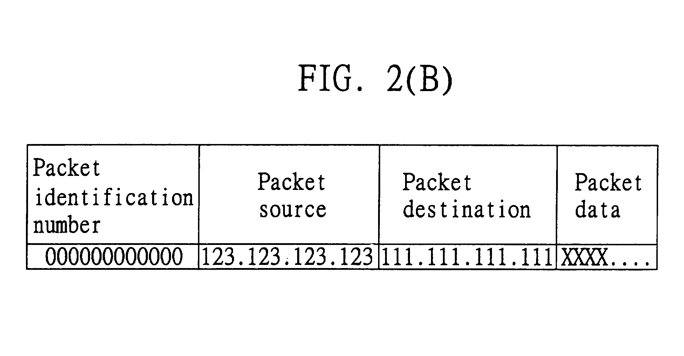

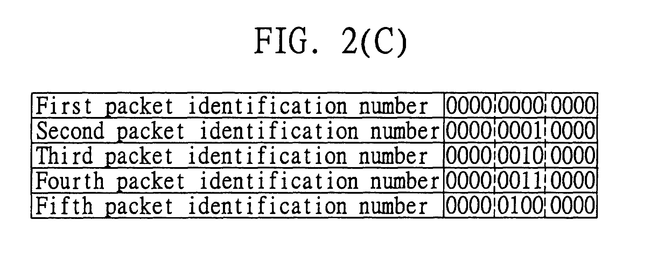

FIGs. 2(A) to 2(C) illustrate data stored in the file downloading database 24 of the file downloading system 2 shown in FIG. 1; FIG. 2(A) shows data contained in file downloading records 240; FIG. 2(B) shows data stored in a packet in a file downloading record 240 of FIG. 2(A); FIG. 2(C) shows identification correlation between packets stored in the file downloading record 240 of FIG. 2(A).

First, as shown in FIG. 2(A), each file downloading record 240 is composed of a membership number, a file identification number, a total packet number, and data of a plurality of packets, and with the membership number and file identification number being used as a dedicated identification code for the file downloading record 240. When a user 1 submits a file downloading request, the transmitting/receiving module 20 searches respectively from the file resource database 21 and the member database 22 for a file identification number and a membership number corresponding to a requested file and a login account and password of the user 1 contained in the file downloading request, so as to establish a file downloading record 240 by the file identification number and the membership number, and to retrieve the requested file corresponding to the file identification number from the file resource database 21. Then, the packet processing module 23 divides the requested file into an appropriate number of packets according to file size and limitation in packet size for network transmission, and thus obtains a total number of the packets, so as to store the packets and the total number thereof in the file downloading record 240 in the file downloading database 24. For example, as shown in FIG. 2(A), a total packet number of a file downloading record 241 is 3, and first, second and third packets of a file with a file identification number "file001" are transmitted to a user of a membership number "00001".

FIG. 2(B) illustrates data stored in a packet. As shown in the drawing, each packet includes a packet identification number, a packet source, a packet destination and packet data. The packet source is an IP (internet protocol) address of the file downloading system 2. The packet destination is an IP address of a terminal device (or computer device) 10 of a user 1, and is recognized by the communication network 3 for packet transmission. The packet data is data contained in one of a plurality of packets formed by dividing a file via the packet processing module 23, wherein the plurality of packets are each designated with a packet identification number in packet-forming order, whereby the transmitting/receiving module 20 recognizes transmission order of the packets in terms of corresponding packet identification numbers. For example, a packet identification number may be formed of 12 bits "000000000000", wherein the first four bits "0000" and the last four bits "0000" are used for allowing the transmitting/receiving module 20 to recognize a set of packets being currently transmitted, and the middle four bits "0000" shows that this packet is the first-formed packet from file division.

FIG. 2(C) illustrates packet identification numbers of a plurality of packets, for example, five packets formed from file division. As the middle four bits of each packet identification number indicates packet-forming order of a corresponding one of the packets, the transmitting/receiving module 20 can thus in order transmit the packets to the computer device 10 of the user 1. When the transmitting/receiving module 20 transmits a packet to the computer device 10 and receives a packet-received request from the computer device 10, the calculating module 25 is prompted to deduct the total packet number by 1 in the file downloading record 240. Thereby, the transmitting/receiving module 20 can retrieve a proper packet for next transmission or delivery according to the currently recorded total packet number processed by the calculating module 25 and the middle four bits of packet identification numbers, so as to allow the packets to be in order transmitted via the transmitting/receiving module 20 to the computer device 10 of the user 1.

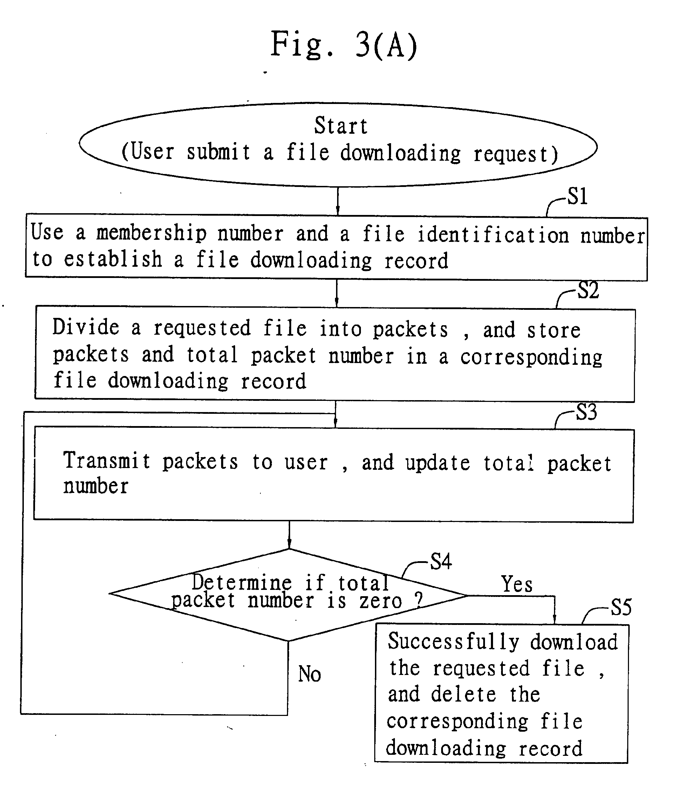

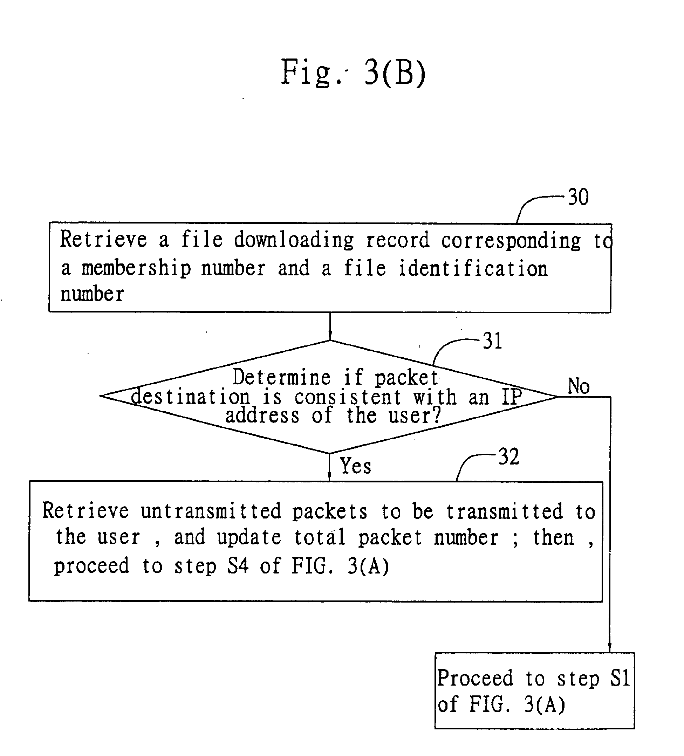

FIGs. 3(A) and 3(B) illustrate process steps of a file downloading method in the use of the file downloading system 2 according to the invention. The following description is made with reference to FIGs. 1, 3(A) and 3(B).

As shown in FIG. 3(A), when a user 1 uses a computer device 10 to input a file downloading request to the transmitting/receiving module 20, it proceeds to step S1; processes for the user 1 to log in the file downloading system 2, such as inputting a login account and a password of the user 1, are conventional in the art and not to be further described herein. In step S1, the transmitting/receiving module 20 retrieves respectively from the file resource database 21 and the member database 22 for a file identification number and a membership number corresponding to a requested file and the login account and password of the user 1 contained in the file downloading request, so as to establish a file downloading record 240 by the file identification number and the membership number. Then, it proceeds to step S2.

In step S2, when the transmitting/receiving module 20 retrieves the requested file from the file resource database 21 according to the file identification number, the packet processing module 23 divides the requested file into an appropriate number of packets according to file size and limitation in packet size for network transmission, and thus obtains a total number of the packets, so as to store the packets and the total number thereof in the file downloading record 240 in the file downloading database 24; each of the packets includes a dedicated packet identification number, a packet source, a packet destination, and packet data. Then, it proceeds to step S3.

In step S3, after the packets are formed by dividing the requested file, the transmitting/receiving module 20 in order transmits the packets stored in the file downloading record 240 to the computer device 10 of the user 1. When the computer device 10 receives a packet and sends a packet-received request to the transmitting/receiving module 20, the calculating module 25 is prompted to deduct the total packet number by 1 and update the total packet number in the file downloading record 240. Then, it proceeds to step S4.

In step S4, the transmitting/receiving module 20 determines if the total packet number in the file downloading record 240 is zero; if yes, it proceeds to step S5; if no, it goes back to step S3.

In step S5, when the total packet number is determined by the transmitting/receiving module 20 to be zero, it indicates the requested file is successfully downloaded to the computer device 10 of the user 1, and the file downloading record 240 corresponding to the completely downloaded file is deleted.

As shown in FIG. 3 (B), in step S3 of FIG. 3(A), in the case of a network server being overloaded, busy network transmission or network linkage interruption, after the user 1 uses the computer device 10 to re-input its login account and password to log in the file downloading system 2 and submit a file downloading request, it proceeds to step S30. In step S30, the transmitting/receiving module 20 searches respectively in the file resource database 21 and the member database 22 for a file identification number and a membership number corresponding to a requested file and the login account and password of the user 1 contained in the file downloading request, so as to retrieve from the file downloading database 24 for a file downloading record 240 corresponding to the identification number and the membership number. Then, it proceeds to step S31.

In step S31, the transmitting/receiving module 20 determines of packet destinations of packets stored in the retrieved file downloading record 240 are consistent with an IP address of the computer device 10 of the user 1; if yes, it proceeds to step S32; if no, it proceeds to step S1 of FIG. 3(A).

In step S32, the transmitting/receiving module 20 retrieves untransmitted packets according to the total packet number in the file downloading record 240, and in order transmits the untransmitted packets to the computer device 10 of the user 1. When computer device 10 of the user 1 receives a packet and sends a packet-received request back to the transmitting/receiving module 20, the calculating module 25 is prompted to deduct the total packet number by 1, and update the total packet number in the file downloading record 240. Then, it proceeds to step S4 of FIG. 3(A).

Therefore, when a user downloads a file with large data content, in the case of a network server being overloaded, busy network transmission or network linkage disconnection to interrupt file transmission, the user may continuously download untransmitted part of the file after re-logging into the file downloading system 2, without having to re-download previously downloaded part of the file as implemented in the prior art, thereby making file downloading time-effectively to carry out through the use of the file downloading method and system 2 according to the invention.

The invention has been described using exemplary preferred embodiments. However, it is to be understood that the scope of the invention is not limited to the disclosed embodiments. On the contrary, it is intended to cover various modifications and similar arrangements, for example, data storage is not limited to be structured as shown in FIGs. 2(A), 2(B) and 2(C); moreover, a user 1 may use a portable electronic device such as cellular phone or personal digital assistant (PDA) to construct linkage to the file downloading system2 via a wireless network, besides using a computer device 10 and Internet. The scope of the claims, therefore, should be accorded the broadest interpretation so as to encompass all such modifications and similar arrangements.

## Claims

1. A file downloading method, for linking a user at a terminal device to a website server via a communication network, so as to allow the user to download file resources provided from the website server; the file downloading method comprising the steps of:
(1) sending a file downloading request via the user to the website server, and retrieving via the website server respectively from a member database and a file resource database thereof for a membership number and a file identification number corresponding to a login account and a password of the user and a requested file contained in the file downloading request, so as to establish a file downloading record by the membership number and the file identification number and to store the file downloading record in a file downloading database of the website server;
(2) retrieving via the website server from the file resource database for the requested file according to the file identification number, and dividing the requested file into a plurality of packets, allowing the packets and a total packet number to be stored in the file downloading record;
(3) transmitting in order the packets via the website server to the terminal device of the user, and updating the total packet number in the file downloading record by deducting the total packet number by one when the user receives a packet; and
(4) determining via the website server if the total packet number is zero; if yes, the requested file being successfully downloaded to the terminal device of the user, and deleting the file downloading record corresponding to the requested file; if no, going back to step (3).

2. The file downloading method of claim 1, wherein in step (3), if packet transmission from the website server to the terminal device of the user is ' interrupted, step (3) further comprises the steps of:
(3-1) inputting the login account and the password via the user to log in the website server; and sending a file downloading request to the website server;
(3-2) searching via the website server respectively in the member database and the file resource database for a membership number and a file identification number corresponding to the login account and password of the user and a requested file contained in the file downloading request, and retrieving via the website server from the file downloading database for a file downloading record corresponding to the membership number and the file identification number;
(3-3) determining if packet destinations stored in the retrieved file downloading record are consistent with an IP address of the terminal device of the user; if yes, proceeding to step (3-4); if no, going back to step (1); and
(3-4) retrieving untransmitted packets via the website server according to the total packet number in the retrieved file downloading record, and transmitting the untransmitted packets via the website server to the terminal device of the user in a manner that, when the user receives a packet and sends a packet-received request back to the website server, the total packet number in the retrieved file downloading record is updated by deducting the total packet number by one; then, proceeding to step (4).

3. The file downloading method of claim 1, wherein in step (2), the requested file is divided into a plurality of packets according to file size and limitation in packet size for network transmission, and each packet includes a packet identification number for recognition by the website server, a packet source for recognition of an IP address of the website server by the communication network, a packet destination for recognition of an IP address of the terminal device of the user by the communication network, and data of the requested file contained in the packet.

4. The file downloading method of claim 1, wherein the terminal device is a computer device.

5. The file downloading method of claim 1, wherein the terminal device is a portable electronic device.

6. The file downloading method of claim 5, wherein the portable electronic device is a personal digital assistant (PDA).

7. The file downloading method of claim 5, wherein the portable electronic device is a cellular phone.

8. A file downloading system, for allowing a user at a terminal device to download file resources provided from a website server via a communication network; the file downloading system comprising:
a transmitting/receiving module for receiving and processing a file downloading request from the user, allowing processed results of the file downloading request to be transmitted to the terminal device of the user;
a file resource database for storing a plurality of file records relating to files provided from the website server to be downloaded by the user, wherein each file record includes a file identification number and a file corresponding to the file identification number;
a member database for storing a plurality of member data records, each member data record including a login account and a password of a user and a membership number corresponding to the login account and password, wherein upon receiving the file downloading request from the user, the transmitting/receiving module retrieves respectively from the member database and the file resource database for a membership number and a file identification number corresponding to the login account and password of the user and a requested file contained in the file downloading request, so as to establish a file downloading record by the membership number and the file identification number;
a packet processing module for dividing the requested file into a plurality of packets according to file size and limitation in packet size for network transmission when the transmitting/receiving module retrieves from the file resource database for the requested file according to the file identification number, and for storing the packets and a total packet number in the file downloading record corresponding to the membership number of the user and the file identification number of the requested file;
a file downloading database for storing a plurality of file downloading records, wherein each file downloading record includes a membership number of a user who downloads a corresponding file, a file identification number of the file, a total packet number and packets formed by division of the file; and
a calculating module for updating a total packet number in a file downloading record by deducting the total packet number by one when the transmitting/receiving module transmits a packet formed by division of a corresponding file to the terminal device of the user, wherein when the total packet number is reduced to be zero, the file is successfully downloaded to the user, and the file downloading record corresponding to the downloaded file is deleted by the transmitting/receiving module.

9. The file downloading system of claim 8, wherein the file downloading system is established in the website server.

10. The file downloading system of claim 8, wherein each packet includes a packet identification number for recognition by the website server, a packet source for recognition of an IP address of the website server by the communication network, a packet destination for recognition of an IP address of the terminal device of the user by the communication network, and data of the requested file contained in the packet.

11. The file downloading system of claim 8, wherein the terminal device is a computer device.

12. The file downloading system of claim 8, wherein the terminal device is a portable electronic device.

13. The file downloading system of claim 12, wherein the portable electronic device is a personal digital assistant (PDA).

14. The file downloading system of claim 12, wherein the portable electronic device is a cellular phone.
